# EUROPEAN PATENT APPLICATION

(11) **EP 2 584 509 A1**
(43) Date of publication of application: **24.04.2013**
(21) Application number: 12175243.0
(22) Date of filing: 06.07.2012
(51) Int. Cl.: G06Q 10/10, G06F 17/27

(54) **Note compiler interface**

(30) Priority: 17.10.2011 US 201161548054 P
(71) Applicant: Research In Motion Limited, Waterloo, ON N2L 3W8 (CA)
(72) Inventor: Eriksson, Marcus, 211 40 Malmö (SE); Hallerström Sjöstedt, Svante Magnus, 211 40 Malmö (SE)
(74) Representative: Finnie, Peter John

(57) **Abstract**

A computer implemented method is performed at an electronic device adapted to receive text-based input and having a display. The method comprises receiving text-based input, analyzing the inputted text, and performing, in dependence on the analyzing, at least one of two actions. The first action comprises comparing at least some of the analyzed text with other text accessed by the device; if a match is found between said at least some of the analyzed text and said accessed text, retrieving data associated with the matching accessed text, and associating the retrieved data with the inputted text for subsequent provision to the user. The second action comprises providing data associated with at least some of the analyzed text to a module of the device. In this way, data pull and push actions are performed in dependence on the analyzing. An electronic device and computer program product are also provided.

## Description

### Technical Field

The disclosed embodiments relate to an electronic device, and in particular to a portable electronic device having limited text entry capabilities, and a method of operation thereof.

### Background of the Invention

Portable electronic devices having limited text entry capabilities have recently become widespread and are ever increasing in popularity. As devices and functionality evolves, users are increasingly demanding improved interactivity with, and access to, the content stored on the device. This is particularly so in the case of portable electronic devices, and also devices having newer forms of input, such as gesture-based input, which have recently become widespread and increasing in popularity.

It is no longer adequate to simply display the content in the manner in which it is stored or input by the user. Users demand ever more interactivity from their devices and content, whether in terms of the simplicity or speed of interaction or the way content is displayed. The present disclosure seeks to provide such increased interactivity, particularly in the context of a user interface for compiling notes or memos and the like.

### Brief Description of the Drawings

Examples of the present invention will now be described in detail with reference to the accompanying drawings, in which:

Figure 1 is a block diagram illustrating an electronic device in accordance with example embodiments of the present disclosure;

Figure 2 is a front view of a smartphone in accordance with example embodiments of the present disclosure;

Figure 3 is a front view of a tablet computer in accordance with example embodiments of the present disclosure;

Figure 4 shows a known exemplary interface for displaying a plurality of items;

Figure 5 shows an interface in accordance with an example embodiment of the present disclosure;

Figure 6 shows a flow chart illustrating an example embodiment of the present disclosure;

Figure 7 shows an example analysis of a text string illustrating an example embodiment of the present disclosure;

Figure 8 is a block diagram illustrating an example embodiment of the present disclosure; and,

Figure 9 is a block diagram illustrating an example embodiment of the present disclosure.

### Description of Embodiments

Embodiments set out in this application relate generally to a method of creating and interacting with an enhanced set of text information for example in a notes or memo creation application on an electronic device such as a portable electronic device. Embodiments may facilitate user interaction with the electronic device such that the user is presented with a 'rich' note full of advanced and interactive content despite having available only a limited method of text input and a limited amount of control over the text. Simple text may be augmented with a variety of data, information and formatting to enhance the look and feel of the text. Some embodiments relate to different forms of user input, including newer forms of user input such as gesture-based or speech-based.

In accordance with an embodiment, a computer implemented method is provided comprising, at an electronic device adapted to receive text-based input and having a display:
receiving text-based input;
analyzing the inputted text; and,
performing, in dependence on the analyzing, at least one of:
   (i) comparing at least some of the analyzed text with other text accessed by the device;
      if a match is found between said at least some of the analyzed text and said accessed text, retrieving data associated with the matching accessed text; and,
      associating the retrieved data with the inputted text for subsequent provision to the user;
      and,
   (ii) providing data associated with at least some of the analyzed text to a module of the device.

In certain embodiments the analyzing and performing steps may be executed dynamically ("on the fly"), as text-based input is received. In other embodiments the analyzing and performing steps may only be executed after notification that text-based input is complete. These latter embodiments may particularly apply to text based inputs which require further processing, such as, but not limited to, voice-to-text. Moreover, the user may wish to indicate when text entry is complete and initiate the analyzing and performing steps. In some embodiments initial analyzing and performing steps may be executed dynamically during text entry, and further analyzing and performing steps may be executed once text entry is complete and indicated as such. Further combinations of these embodiments are also possible.

In certain embodiments the analyzing is based on one or more predetermined rules or sets of rules. In certain embodiments the analyzing includes semantic analysis of the inputted text. In certain embodiments the analyzing includes parsing the inputted text. In certain embodiments the analyzing comprises counting a number of characters in the text. In certain embodiments the analyzing comprises identifying particular groupings of characters.

In certain embodiments the accessed text is accessed from a data store of the device. In certain embodiments the accessed text is associated with an application module of the device. In certain embodiments the accessed text is associated with a contacts list of an electronic messaging module of the device. In certain embodiments the retrieved data is content associated with the text accessed from the data store of the device. In certain embodiments the accessed text is accessed from a predetermined resource external to the device and in communication with the device. In certain embodiments the accessed text is accessed from an online resource.

In certain embodiments the online resource is a predetermined online resource. In certain embodiments the online resource is an internet resource. In certain embodiments the accessed text is filtered. In certain embodiments the retrieved data is retrieved from the online resource. In certain embodiments the retrieved data includes text retrieved from the online resource. In certain embodiments the retrieved data includes image data retrieved from the online resource.

In certain embodiments the method further comprises prompting the user to confirm that the retrieved data should be associated with the inputted text. In certain embodiments the method further comprises prompting the user to provide user input for association with the inputted text. In certain embodiments the method further comprises: displaying a text window on a first display area of the display; and, displaying the inputted text in the text window. In certain embodiments the method further comprises displaying the text in a visual item on the display augmented with the retrieved data. In certain embodiments the method further comprises displaying the text in a visual item on the display using a selected formatting.

In certain embodiments the formatting applied to the inputted text is selected by the user. In certain embodiments the formatting applied to the inputted text is selected in dependence on a characteristic of the text. In certain embodiments the formatting applied to the inputted text is selected according to the analyzing of the text. In certain embodiments the analyzing comprises counting a number of characters in the text and the formatting applied to the inputted text is determined by said number of characters.

In certain embodiments, if the number of characters in the inputted text is less than a predetermined minimum, the formatting applies emphasis to the text in the visual item. In certain embodiments the emphasis comprises emboldening the text. In certain embodiments the emphasis comprises using a larger font for the text than a default font size. Of course, other formatting is possible, including, but not limited to letter spacing and alignment. In certain embodiments the analyzing comprises identifying a special character in the inputted text and the formatting includes applying to at least some of the text a predetermined formatting associated with the special character.

In certain embodiments the text-based input is speech to text. In some embodiments the text-based input comprises a stylus-based input with character recognition. In other embodiments the text-based input may be derived from other applications on the device, including, but not limited to, browser and mail applications. The text may be sourced from such applications, including by direct copying and pasting.

In certain embodiments the module of the device is an electronic messaging module of the device. In certain embodiments the data provided to the electronic messaging module is contact data. In certain embodiments the contact data includes one or more of telephone number, email address, instant messaging address. In certain embodiments the module of the device is a calendar module of the device. In certain embodiments the data provided to the calendar module is appointment data. In certain embodiments the data provided to the module is augmented with retrieved data associated with matching accessed text.

In accordance with an embodiment, an electronic device is provided comprising: a display; an input device for text based input; one or more processors; and, memory comprising instructions which when executed by one or more of the processors cause the electronic device to: receive text-based input; analyze the inputted text; and, perform, in dependence on the analyzing, at least one of: (i) comparing at least some of the analyzed text with other text accessed by the device; if a match is found between said at least some of the analyzed text and said accessed text, retrieving data associated with the matching accessed text; and, associating the retrieved data with the inputted text for subsequent provision to the user; and, (ii) providing data associated with at least some of the analyzed text to a module of the device. In other embodiments the memory comprises instructions which when executed by the one or more of the processors cause the electronic device to operate as described in preceding paragraphs.

In certain embodiments the input device is a touch pad of the electronic device. In certain embodiments the touch pad is provided as a touch-sensitive overlay on the display screen, thus providing a touch-sensitive screen. In certain embodiments the input device is a speech to text device. In other embodiments the input device comprises a stylus and character recognition. In yet other embodiments the input device may be a device capable of detecting gesture-based input, including, but not limited to camera and infra red sensor.

In accordance with an embodiment a computer program product is provided comprising memory comprising instructions which when executed by one or more of the processors of an electronic device adapted to receive text-based input and having a display cause the electronic device to: receive text-based input; analyze the inputted text; and, perform, in dependence on the analyzing, at least one of: (i) comparing at least some of the analyzed text with other text accessed by the device; if a match is found between said at least some of the analyzed text and said accessed text, retrieving data associated with the matching accessed text; and, associating the retrieved data with the inputted text for subsequent provision to the user; and, (ii) providing data associated with at least some of the analyzed text to a module of the device. In other embodiments the computer program product is provided comprising memory comprising instructions which when executed by the one or more of the processors cause the electronic device to operate as described in preceding paragraphs.

In accordance with an embodiment a computer implemented method is provided comprising, at an electronic device adapted to receive text-based input and having a display: displaying a text window on a first display area of the display; receiving a user input comprising text; displaying the text in the text window; analyzing the text to determine a formatting for the text; and displaying the text in a visual item on the display using the formatting determined from the analyzing.

In certain embodiments the analyzing comprises counting a number of characters in the text. In certain embodiments, if the number of characters in the text is less than a predetermined minimum, the formatting applies emphasis to the text in the visual item. In certain embodiments the emphasis comprises emboldening the text. In certain embodiments the emphasis comprises using a larger font for the text than a default font size. In certain embodiments the analyzing comprises identifying a special character in the text and applying to at least some of the text a predetermined formatting associated with the special character.

The disclosure generally relates to an electronic device, which, in embodiments described herein, utilises gesture based inputs. Although the present disclosure is described in the context of a portable electronic device having a touchscreen, it will be understood that any motion sensitive or motion detecting electronic device may be used to implement the principles described in the present disclosure. For example, a camera or infrared sensor assembly adapted to capture hand or body movement may be used to detect an input gesture to a portable or non-portable electronic device. Other examples are of course envisaged.

As mentioned above, the present disclosure is described in the context of a portable electronic device. Examples of portable electronic devices include mobile, or handheld, wireless communication devices such as pagers, cellular phones, cellular smart-phones, wireless organizers, personal digital assistants, wirelessly enabled notebook computers, wirelessly enabled tablet computers and so forth. The portable electronic device may also be a portable electronic device without wireless communication capabilities, such as a handheld electronic game device, digital photograph album, tablet computer, digital camera, or other device.

### Example Electronic Device

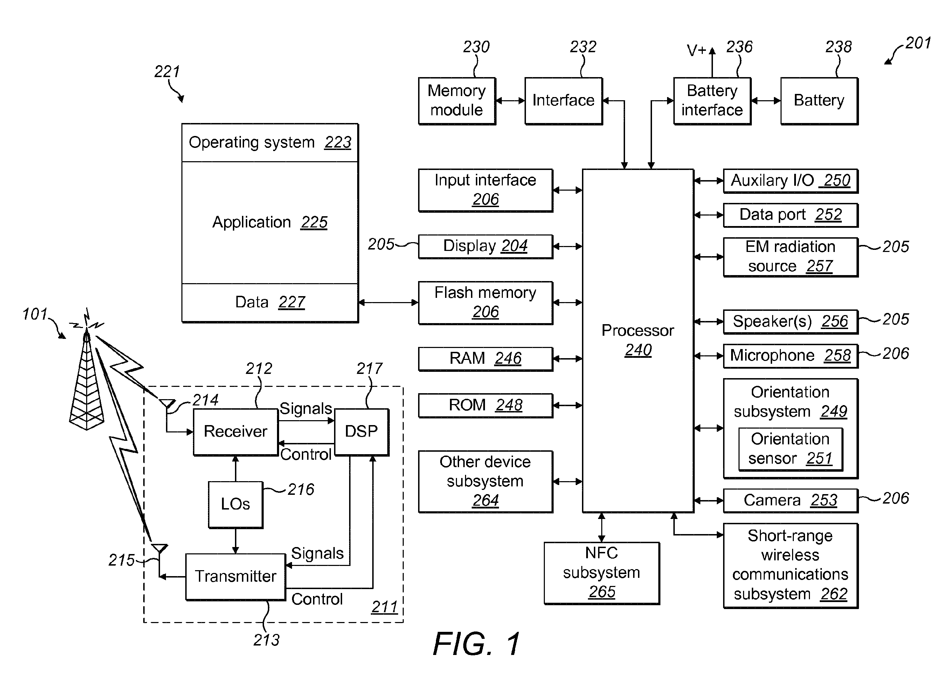

Reference will now be made to Fig. 1 which illustrates an example electronic device 201 in which example embodiments described in the present disclosure can be applied. It will be appreciated that one or more of the electronic devices 201 suitable for use with the present disclosure may be of a type which differs from the electronic device 201 of Fig. 1 and that some of the features, systems or subsystems of the electronic device 201 discussed below with reference to Fig. 1 may be omitted from electronic devices 201 which implement the principles of the present disclosure.

In the illustrated example embodiment, the electronic device 201 is a communication device and, more particularly, is a mobile communication device having data and voice communication capabilities, and the capability to communicate with other computer systems; for example, via the Internet. It will, however, be appreciated that the electronic device 201 may take other forms, including any one of the forms listed above.

Depending on the functionality provided by the electronic device 201, in various example embodiments the electronic device 201 may be a multiple-mode communication device configured for both data and voice communication, a mobile telephone, such as a smartphone, a wearable computers such as a watch, a tablet computer such as a slate computer, a personal digital assistant (PDA), or a computer system. The electronic device 201 may take other forms apart from those specifically listed above. The electronic device may also be referred to as a mobile communications device, a communication device, a mobile device and, in some cases, as a device.

The electronic device 201 includes a controller including one or more processor 240 (such as a microprocessor) which controls the overall operation of the electronic device 201. The processor 240 interacts with device subsystems such as a wireless communication subsystem 211 for exchanging radio frequency signals with a wireless network 101 to perform communication functions. The processor 240 is communicably coupled with additional device subsystems including one or more output interfaces 205 (such as a display 204 and/or a speaker 256 and/or electromagnetic (EM) radiation source 257), one or more input interfaces 206 (such as a camera 253, microphone 258, keyboard (not shown), control buttons (not shown), a navigational input device (not shown), and/or a touch-sensitive overlay (not shown)) associated with a touchscreen display 204, an orientation subsystem 249, memory (such as flash memory 244, random access memory (RAM) 246, read only memory (ROM) 248, etc.), auxiliary input/output (I/O) subsystems 250, a data port 252 (which may be a serial data port, such as a Universal Serial Bus (USB) data port), a near field communications (NFC) subsystem 265, a short-range communication subsystem 262 and other device subsystems generally designated as 264. Some of the subsystems shown in Fig. 1 perform communication-related functions, whereas other subsystems may provide "resident" or on-device functions.

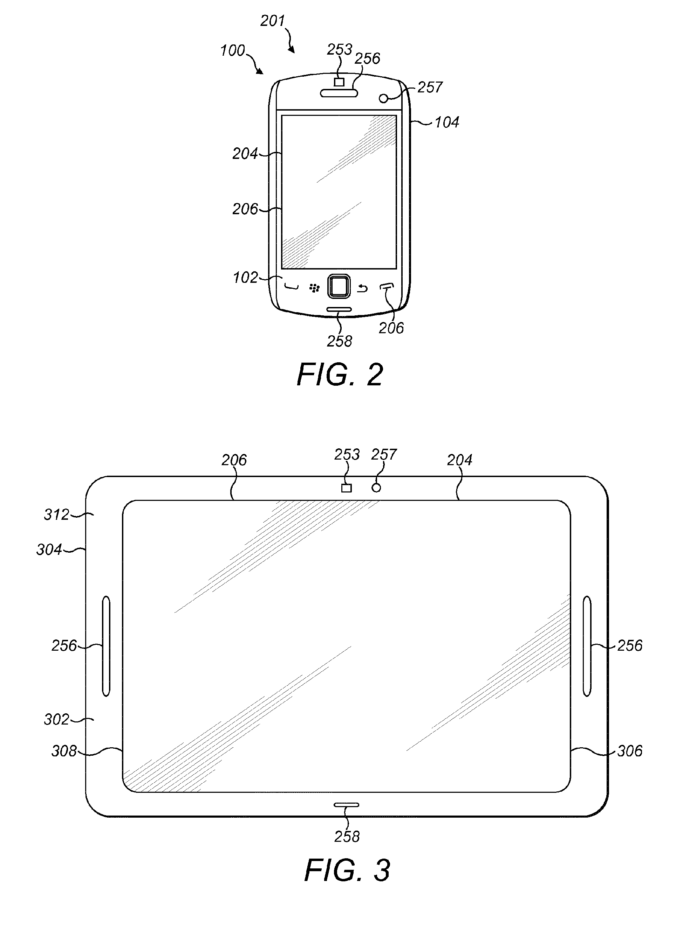

In at least some example embodiments, the electronic device 201 may include a touchscreen display which acts as both an input interface 206 (i.e. touch-sensitive overlay) and an output interface 205 (i.e. display). The touchscreen display may be constructed using a touch-sensitive input surface which is connected to an electronic controller and which overlays the display 204. The touch-sensitive overlay and the electronic controller provide a touch-sensitive input interface 206 and the processor 240 interacts with the touch-sensitive overlay via the electronic controller. In at least some example embodiments, the touch-sensitive overlay may have a touch-sensitive input surface which is larger than the display 204. For example, in at least some example embodiments, the touch-sensitive overlay may extend overtop of a frame 312 (Fig. 3) which surrounds the display 204. In such example embodiments, the frame 312 (Fig. 3) may be referred to as an active frame since it is capable of acting as an input interface 206. In at least some example embodiments, the touch-sensitive overlay may extend to the sides of the electronic device 201.

As noted above, in some example embodiments, the electronic device 201 may include a communication subsystem 211 which allows the electronic device 201 to communicate over a wireless network 101. The communication subsystem 211 includes a receiver 212, a transmitter 213, and associated components, such as one or more antenna elements 214 and 215, local oscillators (LOs) 216, and a processing module such as a digital signal processor (DSP) 217. The antenna elements 214 and 215 may be embedded or internal to the electronic device 201 and a single antenna may be shared by both receiver and transmitter. The particular design of the wireless communication subsystem 211 depends on the wireless network 101 in which electronic device 201 is intended to operate.

In at least some example embodiments, the electronic device 201 may communicate with any one of a plurality of fixed transceiver base stations of the wireless network 101 within its geographic coverage area. The electronic device 201 may send and receive communication signals over the wireless network 101 after the required network registration or activation procedures have been completed. Signals received by the antenna 214 through the wireless network 101 are input to the receiver 212, which may perform such common receiver functions as signal amplification, frequency down conversion, filtering, channel selection, etc., as well as analogue-to-digital (A/D) conversion. A/D conversion of a received signal allows more complex communication functions such as demodulation and decoding to be performed in the DSP 217. In a similar manner, signals to be transmitted are processed, including modulation and encoding, for example, by the DSP 217. These DSP-processed signals are input to the transmitter 213 for digital-to-analogue (D/A) conversion, frequency up conversion, filtering, amplification, and transmission to the wireless network 101 via the antenna 215. The DSP 217 not only processes communication signals, but may also provide for receiver and transmitter control. For example, the gains applied to communication signals in the receiver 212 and the transmitter 213 may be adaptively controlled through automatic gain control algorithms implemented in the DSP 217.

In some example embodiments, the auxiliary input/output (I/O) subsystems 250 may include an external communication link or interface; for example, an Ethernet connection. The electronic device 201 may include other wireless communication interfaces for communicating with other types of wireless networks; for example, a wireless network such as an orthogonal frequency division multiplexed (OFDM) network. The auxiliary I/O subsystems 250 may include a vibrator for providing vibratory notifications in response to various events on the electronic device 201 such as receipt of an electronic communication or incoming phone call, or for other purposes such as haptic feedback (touch feedback).

In some example embodiments, the electronic device 201 also includes a removable memory module 230 (typically including flash memory, such as a removable memory card) and a memory interface 232. Network access may be associated with a subscriber or user of the electronic device 201 via the memory module 230, which may be a Subscriber Identity Module (SIM) card for use in a GSM network or other type of memory card for use in the relevant wireless network type. The memory module 230 is inserted in or connected to the memory card interface 232 of the electronic device 201 in order to operate in conjunction with the wireless network 101.

The data port 252 may be used for synchronization with a user's host computer system (not shown). The data port 252 enables a user to set preferences through an external device or software application and extends the capabilities of the electronic device 201 by providing for information or software downloads to the electronic device 201 other than through the wireless network 101. The alternate download path may for example, be used to load an encryption key onto the electronic device 201 through a direct, reliable and trusted connection to thereby provide secure device communication.

In at least some example embodiments, the electronic device 201 also includes a device orientation subsystem 249 including at least one orientation sensor 251 which is connected to the processor 240 and which is controlled by one or a combination of a monitoring circuit and operating software. The orientation sensor 251 detects the orientation of the device 201 or information from which the orientation of the device 201 can be determined, such as acceleration. In some example embodiments, the orientation sensor 251 is an accelerometer, such as a three-axis accelerometer. An accelerometer is a sensor which converts acceleration from motion (e.g. movement of the device 201 or a portion thereof due to the strike force) and gravity which are detected by a sensing element into an electrical signal (producing a corresponding change in output). Accelerometers may be available in one, two or three axis configurations. Higher order axis configurations are also possible. Accelerometers may produce digital or analogue output signals depending on the type of accelerometer.

An orientation sensor 251 may generate orientation data which specifies the orientation of the electronic device 201. The orientation data, in at least some example embodiments, specifies the orientation of the device 201 relative to the gravitational field of the earth.

In some example embodiments, the orientation subsystem 249 may include other orientation sensors 251, instead of or in addition to accelerometers. For example, in various example embodiments, the orientation subsystem 249 may include a gravity sensor, a gyroscope, a tilt sensor, an electronic compass or other suitable sensor, or combinations thereof. In some example embodiments, the device orientation subsystem 249 may include two or more orientation sensors 251 such as an accelerometer and an electronic compass.

The electronic device 201 may, in at least some example embodiments, include a near field communications (NFC) subsystem 265. The NFC subsystem 265 is configured to communicate with other electronic devices 201 and/or tags, using an **NFC** communications protocol. **NFC** is a set of short-range wireless technologies which typically require a distance of 4 cm or less for communications. The NFC subsystem 265 may include an NFC chip and an NFC antenna.

The electronic device 201 may include a microphone and/or one or more speakers. In at least some example embodiments, an electronic device 201 may include a plurality of speakers 256. For example, in some example embodiments, the electronic device 201 may include two or more speakers 265. The two or more speakers 256 may, for example, be disposed in spaced relation to one another. That is, in at least some example embodiments, the electronic device 201 may include a first speaker and a second speaker and the first speaker and the second speaker may be spatially separated from one another within the electronic device 201. In at least some example embodiments, the display 204 may be disposed between the first speaker and the second speaker of the electronic device. In such example embodiments, the first speaker may be located at one side of the display 204 and the second speaker may be located at another side of the display which is opposite the side of the display where the first speaker is located. For example, the first speaker may be disposed at a left side of the display and the second speaker may be disposed at a right side of the display.

In at least some example embodiments, each speaker 256 may be associated with a separate audio channel. The multiple speakers may, for example, be used to provide stereophonic sound (which may also be referred to as stereo).

The electronic device 201 may also include one or more cameras 253. The one or more cameras 253 may be capable of capturing images in the form of still photographs or motion video.

In at least some example embodiments, the electronic device 201 includes a front facing camera 253. A front facing camera is a camera which is generally located on a front face of the electronic device 201. The front face is typically the face on which a display 204 is mounted. That is, the display 204 is configured to display content which may be viewed from a side of the electronic device 201 where the camera 253 is directed. The front facing camera 253 may be located anywhere on the front surface of the electronic device; for example, the camera 253 may be located above or below the display 204. The camera 253 may be a fixed position camera which is not movable relative to the display 204 of the electronic device 201 and/or the housing of the electronic device 201. In such example embodiments, the direction of capture of the camera is always predictable relative to the display 204 and/or the housing. In at least some example embodiments, the camera may be provided in a central location relative to the display 204 to facilitate image acquisition of a face.

In at least some example embodiments, the electronic device 201 includes an electromagnetic (EM) radiation source 257. In at least some example embodiments, the EM radiation source 257 is configured to emit electromagnetic radiation from the side of the electronic device which is associated with a camera 253 of that electronic device 201. For example, where the camera is a front facing camera 253, the electronic device 201 may be configured to emit electromagnetic radiation from the front face of the electronic device 201. That is, in at least some example embodiments, the electromagnetic radiation source 257 is configured to emit radiation in a direction which may visible by the camera. That is, the camera 253 and the electromagnetic radiation source 257 may be disposed on the electronic device 201 so that electromagnetic radiation emitted by the electromagnetic radiation source 257 is visible in images obtained by the camera.

In some example embodiments, the electromagnetic radiation source 257 may be an infrared (IR) radiation source which is configured to emit infrared radiation. In at least some example embodiments, the electromagnetic radiation source 257 may be configured to emit radiation which is not part of the visible spectrum. The camera 253 may be a camera which is configured to capture radiation of the type emitted by the electromagnetic radiation source 257. Accordingly, in at least some example embodiments, the camera 253 is configured to capture at least some electromagnetic radiation which is not in the visible spectrum.

In some example embodiments, the electronic device 201 is provided with a service routing application programming interface (API) which provides an application with the ability to route traffic through a serial data (i.e., USB) or Bluetooth® (Bluetooth® is a registered trademark of Bluetooth SIG, Inc.) connection to a host computer system using standard connectivity protocols. When a user connects their electronic device 201 to the host computer system via a USB cable or Bluetooth® connection, traffic that was destined for the wireless network 101 is automatically routed to the electronic device 201 using the USB cable or Bluetooth® connection. Similarly, any traffic destined for the wireless network 101 is automatically sent over the USB cable Bluetooth® connection to the host computer system for processing.

The electronic device 201 also includes a battery 238 as a power source, which is typically one or more rechargeable batteries that may be charged for example, through charging circuitry coupled to a battery interface 236 such as the data port 252. The battery 238 provides electrical power to at least some of the electrical circuitry in the electronic device 201, and the battery interface 236 provides a mechanical and electrical connection for the battery 238. The battery interface 236 is coupled to a regulator (not shown) which provides power V+ to the circuitry of the electronic device 201.

The electronic device 201 includes a short-range communication subsystem 262 which provides for wireless communication between the electronic device 201 and other electronic devices 201. The short-range communication subsystem 262 may be used to provide a common user interface (UI) mode between the electronic device 201 and another electronic device 201 which may, in at least some example embodiments, be an electronic device 201 which is the same or similar to the electronic device 201 discussed with reference to Fig. 1. In at least some example embodiments, the short-range communication subsystem 262 is a wireless bus protocol compliant communication mechanism such as a Bluetooth® communication module to provide for communication with similarly-enabled systems and devices.

The electronic device 201 stores data 227 in an erasable persistent memory, which in one example embodiment is the flash memory 244. In various example embodiments, the data 227 includes service data including information required by the electronic device 201 to establish and maintain communication with the wireless network 101. The data 227 may also include user application data such as email messages, address book and contact information, calendar and schedule information, notepad documents, image files, and other commonly stored user information stored on the electronic device 201 by its user, and other data. The data 227 stored in the persistent memory (e.g. flash memory 244) of the electronic device 201 may be organized, at least partially, into one or more databases or data stores. The databases or data stores may contain data items of the same data type or associated with the same application. For example, email messages, contact records, and task items may be stored in individual databases within the device memory.

The electronic device 201 may, in some example embodiments, be a mobile communication device which may provide two principal modes of communication: a data communication mode and a voice communication mode. In the data communication mode, a received data signal such as a text message, an email message, or Web page download will be processed by the communication subsystem 211 and input to the processor 240 for further processing. For example, a downloaded Web page may be further processed by a browser application or an email message may be processed by an email messaging application and output to the display 204. A user of the electronic device 201 may also compose data items, such as email messages; for example, using the input devices in conjunction with the display 204. These composed items may be transmitted through the communication subsystem 211 over the wireless network 101.

In the voice communication mode, the electronic device 201 provides telephony functions and operates as a typical cellular phone. The overall operation is similar, except that the received signals would be output to the speaker 256 and signals for transmission would be generated by a transducer such as the microphone 258. The telephony functions are provided by a combination of software/firmware (i.e., a voice communication module) and hardware (i.e., the microphone 258, the speaker 256 and input interfaces 206). Alternative voice or audio I/O subsystems, such as a voice message recording subsystem, may also be implemented on the electronic device 201. Although voice or audio signal output is typically accomplished primarily through the speaker 256, the display screen 204 may also be used to provide an indication of the identity of a calling party, duration of a voice call, or other voice call related information.

The processor 240 operates under stored program control and executes software modules 221 stored in memory such as persistent memory; for example, in the flash memory 244. As illustrated in Fig. 1, the software modules 221 include operating system software 223 and other software applications 225

The software applications 225 on the electronic device 201 may also include a range of additional applications, including for example, a notepad application, Internet browser application, voice communication (i.e. telephony) application, mapping application, or a media player application, or any combination thereof. Each of the software applications 225 may include layout information defining the placement of particular fields and graphic elements (e.g. text fields, input fields, icons, etc.) in the user interface (e.g. the display 204) according to the application.

The software modules 221 or parts thereof may be temporarily loaded into volatile memory such as the RAM 246. The RAM 246 is used for storing runtime data variables and other types of data or information, as will be apparent to those skilled in the art. Although specific functions are described for various types of memory, this is merely one example, and those skilled in the art will appreciate that a different assignment of functions to types of memory could also be used.

A predetermined set of applications that control basic device operations, including data and possibly voice communication applications will normally be installed on the electronic device 201 during or after manufacture. Additional applications and/or upgrades to the operating system 223 or software applications 225 may also be loaded onto the electronic device 201 through the wireless network 101, the auxiliary I/O subsystem 250, the data port 252, the short-range communication subsystem 262, or other suitable subsystem 264. The downloaded programs or code modules may be permanently installed; for example, written into the program memory (i.e. the flash memory 244), or written into and executed from the RAM 246 for execution by the processor 240 at runtime.

### Example Smartphone Electronic Device

As discussed above, electronic devices 201 may take a variety of forms. For example, in at least some example embodiments, one or more of the electronic devices which are configured to enter a common user interface mode with another electronic device may be a smartphone.

Referring now to Fig. 2, a front view of an example electronic device 201 which is a smartphone 100 is illustrated. The smartphone 100 is a mobile phone which offers more advanced computing capability than a basic non-smartphone cellular phone. For example, the smartphone 100 may have the ability to run third party applications which are stored on the smartphone.

The smartphone 100 may include the components discussed above with reference to Fig. 1 or a subset of those components. The smartphone 100 includes a housing 104 which houses at least some of the components discussed above with reference to Fig. 1.

In the example embodiment illustrated, the smartphone includes a display 204, which may be a touchscreen display which acts as an input interface 206. The display 204 is disposed within the smartphone 100 so that it is viewable at a front side 102 of the smartphone 100. That is, a viewable side of the display 204 is disposed on the front side 102 of the smartphone. In the example embodiment illustrated, the display 204 is framed by the housing 104.

The example smartphone 100 also includes other input interfaces 206 such as one or more buttons, keys or navigational input mechanisms. In the example illustrated, at least some of these additional input interfaces 206 are disposed for actuation at a front side 102 of the smartphone.

The example smartphone also includes a speaker 256. In the example embodiment illustrated, the smartphone includes a single speaker 256 which is disposed vertically above the display 204 when the smartphone 100 is held in a portrait orientation where its height is longer than its width. The speaker 256 may be disposed on the front face of the smartphone 100.

While the example smartphone 100 of Fig. 2 includes a single speaker 256, in other example embodiments, the smartphone 100 may include a greater number of speakers 256. For example, in at least some example embodiments, the smartphone 100 may include a second speaker 256 which is disposed vertically below the display 204 when the smartphone is held in a portrait orientation where its height is longer than its width (i.e. the orientation illustrated in Fig. 2).

The example smartphone 100 also includes a microphone 258. In the example illustrated, the microphone 258 is vertically disposed below the display 204 when the smartphone is held in the portrait orientation. The microphone 258 and at least one speaker 256 may be arranged so that the microphone is in close proximity to a user's mouth and the speaker 256 is in close proximity to a user's ear when the user holds the phone to their face to converse on the smartphone.

The example smartphone 100 also includes a front facing camera 253 which may be located vertically above the display 204 when the smartphone 100 is held in a portrait orientation where its height is longer than its width. The front facing camera 253 is located so that it may capture images of objects which are located in front of and/or surrounding the front side of the smartphone 100.

The example smartphone 100 also includes an electromagnetic radiation source 257. The electromagnetic radiation source 257 is disposed on the front side 102 of the smartphone 100. In this orientation, electromagnetic radiation which is produced by the electromagnetic radiation source 257 may be projected onto objects which are located in front of and/or surrounding the front side of the smartphone 100. Such electromagnetic radiation (or the projection of electromagnetic radiation onto objects) may be captured on images obtained by the camera 253.

### Example Tablet Electronic Device

In at least some example embodiments, the one or more of the electronic devices 201 may be a tablet computer. Referring now to Fig. 3, a front view of an example electronic device 201 which is a tablet computer 300 is illustrated.

The tablet computer 300 of Fig. 3 may include many of the same features and components of the smartphone 100 of Fig. 2. However, the tablet computer 300 of Fig. 3 is generally larger than the smartphone 100 of Fig. 2. The tablet computer 300 may include the components discussed above with reference to Fig. 1 or a subset of those components. The tablet computer 300 includes a housing 304 which houses at least some of the components discussed above with reference to Fig. 1.

The tablet computer 300 includes a display 204, which may be a touchscreen display which acts as an input interface 206. The display 204 is disposed within the tablet computer 300 so that it is viewable at a front side 302 of the tablet computer 300. That is, a viewable side of the display 204 is disposed on the front side 302 of the tablet computer 300. In the example embodiment illustrated, the display 204 is framed by the housing 304.

A frame 312 surrounds the display 204. The frame 312 is portion of the housing 304 which provides a border around the display 204. In at least some example embodiments, the frame 312 is an active frame 312. That is, the frame has a touch sensitive overlay which allows the electronic device 201 to detect a touch applied to the frame thus allowing the frame 312 to act as an input interface 206 (Fig. 1).

The example tablet computer 300 includes a plurality of speakers 256. In the example embodiment illustrated, the tablet includes two speakers 256. The two speakers 256 are disposed on opposing sides of the display 204. More particularly, when the tablet computer 300 is held in a landscape orientation (such as the orientation illustrated in Fig. 3) where its width is longer than its height, one of the two speakers is disposed on a right side 306 of the display 204 and one of the speakers is disposed on the left side 308 of the display 204. Both speakers 256 are disposed on the front side 302 of the tablet computer 300.

The example tablet computer 300 also includes a microphone 258. In the example illustrated, the microphone 258 is vertically disposed below the display 204 when the tablet computer is held in the landscape orientation illustrated in Fig. 3. The microphone 258 may be located in other locations in other example embodiments.

The example tablet computer 300 also includes a front facing camera 253 which may be located vertically above the display 204 when the tablet computer 300 is held in a landscape orientation (i.e. the orientation of Fig. 3). The front facing camera 253 is located so that it may capture images of objects which are located in front of and/or surrounding the front side of the tablet computer 300.

The example tablet computer 300 also includes an electromagnetic radiation source 257. The electromagnetic radiation source 257 is disposed on the front side 304 of the tablet computer 300. In this orientation, electromagnetic radiation which is produced by the electromagnetic radiation source 257 may be projected onto objects which are located in front of and/or surrounding the front side 302 of the tablet computer 300. Such electromagnetic radiation (or the projection of electromagnetic radiation onto objects) may be captured on images obtained by the camera 253.

In some example embodiments, one or more touches also known as touch contacts or touch events, may be detected by the input interface 204, in one example touch-sensitive display screen and the touch-sensitive frame area. Multiple simultaneous touches may be detected. The processor 240 may determine attributes of the touch, including a location of a touch, and may monitor any movement of the touch. Touch location and movement data may include an area of contact or a single point of contact, such as a point at or near a centre of the area of contact. The location of a detected touch may include x and y components, e.g., horizontal and vertical components, respectively. Certain touches or combinations of touches are recognised as gestures that lead to certain manipulations or operations of the GUI or of the information presented on the display screen 204. By performing certain gestures on the input detectable area, a user can interact with the GUI and control the applications and operating system of the electronic device. It will be appreciated that, although the present disclosure describes the use of gestures, gesture based input may not be required to implement the principles of some embodiments of the present disclosure.

### Example Gestures

Exemplary gestures include: swipe, flick, pinch, punch or un-pinch, long-press, rotate, grab, tap or any of the above using multiple touch points, for example, a swipe may be performed with multiple fingers on a portable touch sensitive device. A sample of these exemplary gestures will now be described. The list of exemplary gestures given above and below is clearly not exhaustive.

Swipe - an exemplary swipe movement may be a substantially horizontal movement of the input object maintaining contact with the detection surface, or while maintaining a similar distance away from the detection point.

Flick - an exemplary flick movement may be similar in nature to a swipe gesture, i.e. substantially horizontal. A flick gesture is often faster than a swipe and involves the input object being moved progressively away from the detection point during the horizontal movement, often at high speed.

Pinch - an exemplary pinch is a multi-point event comprising two distinct input objects starting substantially apart and moving progressively toward one another, i.e. two opposing translational movements.

Punch or un-pinch - an exemplary punch or un-pinch is a multi-point event comprising two distinct input objects starting substantially close or together and moving progressively apart.

Long-press - an exemplary long-press is an input object held for a prolonged period of time at a particular point.

Rotate - an exemplary rotate is a multi-point event comprising a first input object fixed in a particular location while a second input object moves in a substantially circular manner around the first input object.

Grab - an exemplary grab is a multi-point event comprising at least three input objects starting substantially apart and moving progressively toward one another.

Tap - an exemplary tap is an input object moved quickly toward and away from the detection point.

Other gestures are of course envisaged.

### Example Interface

As described above, in some example embodiments, one or more of the electronic devices may be equipped in an active frame 312. A frame is a portion of the housing of the electronic device 201 which frames the display 204 of the electronic device 201. An active frame 312 is a frame which has a touch sensitive overlay which allows the electronic device 201 to detect a touch applied to the frame. An active frame 312 may be useful in detecting large swiping gestures.

Although the description herein and accompanying Figures illustrate animation and movement in relation to a substantially horizontal direction of the landscape-view display area only, embodiments in which analogous animation and movement in the perpendicular direction and indeed, any other direction, are also possible. Similarly, although the description herein and accompanying Figures illustrate a two-dimensional interface, the disclosed principles equally apply to three-dimensional interfaces.

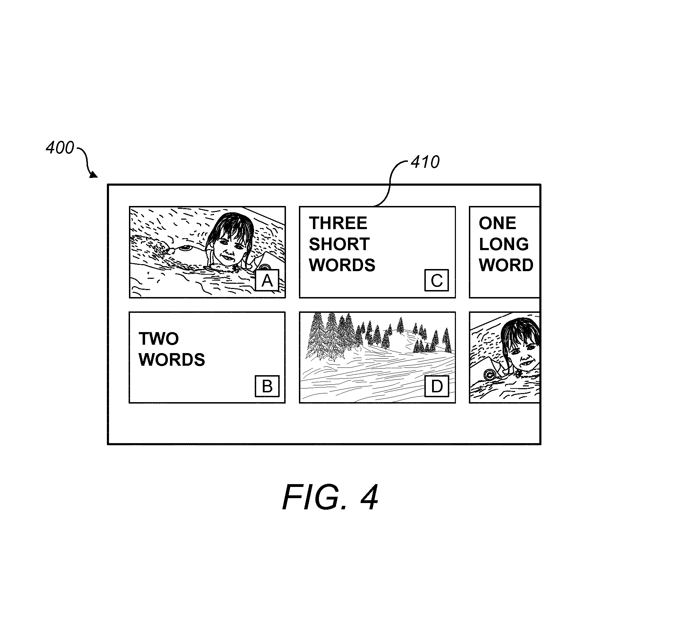

Figure 4 shows an example of an arrangement of items on a Graphical User Interface (GUI) of an electronic device. The items are structured to be displayed in a particular order. As is common in such interfaces, a subset of items is displayed from a larger set. In this example, the items are notes, photos, videos, documents or the like; however, it will be understood that the items may be of any type.

There is no restriction on the ordering of the items when displayed and sorted. Example sorting methods include date modified, date stored, date sent, title, and item type. Other examples are of course contemplated. The items may be stored according to these sorting criteria or merely displayed. The items may also be filtered prior to display.

The items will often be displayed in a list having some structure in terms of how the items grouped or positioned relative to one another. Figure 4 shows a subset of items 410 displayed in a grid-like manner 400. However, any type of method for displaying a subset of items in a structured list of items is particularly suitable for use with the principles of the present disclosure. For example, a vertical list of titles or item details, such as title and date modified, may used to provide an indication of the content of the item. It is not necessary for the items to be displayed in a grid.

When the grid of items is displayed to the user, it may be advantageous to provide for advanced editing quickly and easily. To effect this, a gesture is used to enter an advanced editing mode, in which the keypad may be displayed. A suitable gesture is a vertical swipe in a downward direction. Other gestures are of course envisaged. A vertical swipe may, in some embodiments, be used to effect a change in priority of the item rather than opening the item. For example, an upward swipe may increase the importance level and a downward swipe may decrease the importance level or vice versa. The principles of the present disclosure are of course applicable to any type of editing on an electronic device and not simply an advanced editing mode of a note taking application or compiler. In the context of the present disclosure, navigational input and text input may be provided using gestures, a physical keyboard, a touch keyboard, a camera-detected virtual keyboard, camera detected signing, voice recognition, or stylus input with character recognition. Additionally, text input may be from other applications of the device, including copying therefrom.

### Example note compiler

One of the key uses of portable electronic devices is to take notes on the fly, i.e. taking notes whilst on travelling or away from a desk or fixed location. For example, a portable device user could be taking notes during a meeting or simply 'scribbling' down thoughts on their own. It has been shown that when using devices with limited text-inputs and limited screen sizes, such as tablet computers or touch screen smartphones, it is cumbersome to make notes with rich content and formatting. Typically, users would use desktop PCs for this purpose, often making simple notes on the portable device to be supplemented at a later date on a more comprehensive computer.

### Example photo note compiler

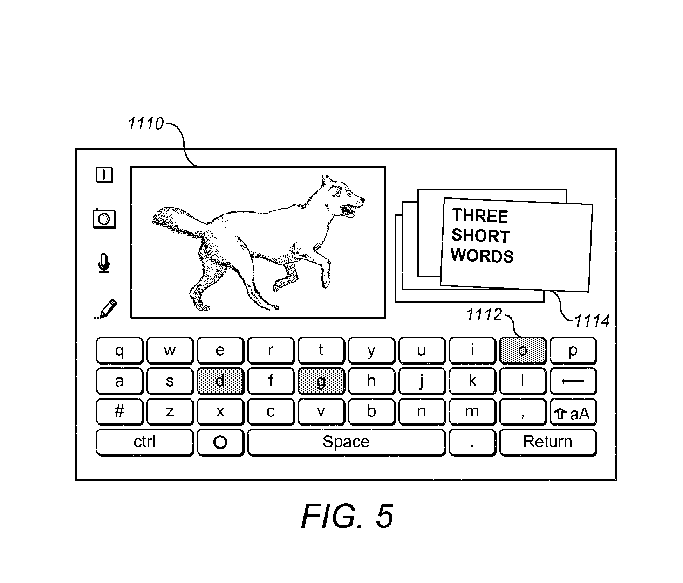

Within the items grid, it would be beneficial to user if it were possible to supplement or create a note based on an alternative form of media. As shown in Figure 5, when editing an item from the grid, a photo could be taken 1110. Other examples of alternative media include sound recordings and video capture. In accordance with the present disclosure, a photo taken by the camera when in the notes application may be supplemented with text 1112, or vice versa. The subsequently created note 1114 may then be added to the grid of items.

### Example 'rich' note compiler

Another problem for users of portable electronic devices, is making sense of these rapidly created notes. A note created regarding a meeting time would have to be separately turned into a 'Calendar' appointment, which is inconvenient at best. Further, if the user writes a name on the note they will still have to use the 'Contacts' application to find that person and call him/her or make amendments, they may possibly have to use the web or a 'Yellow Pages' if you don't already have the number stored in the 'Contacts' application.

It would be particularly advantageous if notes created on the fly were 'rich' in order to properly fulfil their purpose as visible reminders to the users. Further, it would be even more advantageous if the notes propagated their information to appropriate applications on the electronic device.

The notes compiler according the present disclosure introduces the concept of notes pulling or pushing data. In an exemplary scenario, a user may write on a note "meet Anders B at 12:00 in downtown Malmö this Friday". The notes compiler of the present application scans the text and identifies candidates for both pushing and pulling information. The notes compiler identifies that a person, a time and a place are mentioned in the note. Accordingly, the notes compiler 'pulls' information from various web sources such as Wikipedia® or Maps and subsequently embeds a map of Malmö in the note. Alternatively, the notes compiler may also add a snippet of text about Malmö; this may be interesting to the user if Malmö isn't a frequently visited place.

When presented with possible pulled content to be embedded in the note, the note compiler may provide the user with an opportunity to confirm that they would like the additional content added. The note compiler may also allow the user to modify how the pulled content is presented, for example, by cropping or otherwise formatting an image. Furthermore, the note compiler may present a choice of possible content, giving the user the option to choose one, more than one, or none of the presented choices. For example, on identifying a candidate for pulling information, the note compiler may search for images that have tags related to the identified word on an imaging website such as Flickr®. The note compiler may then present an arrangement of content that the user can swipe through and preview before selecting one.

As is described above, information could be 'pulled' from the internet in order to give more context or richer information to a note. The trigger for the 'pulling' of information could be based on algorithmically finding keywords of objects, brands, people, entertainment, places and so on or alternatively on a semi-automatic user interaction where, for example, the user points out which word to retrieve information on. This may also be triggered using a gesture, such as a long-press. For example, if a user long-presses a word, the notes compiler may search the internet for this word and embed a relevant result.

Once the information has been retrieved, it is contemplated that the information will then be embedded in the note. Of course the internet is not the only source from which information could be retrieved. It is contemplated that, for example, the information could be retrieved from the phone itself, i.e. from applications such as E-mail, Calendar or Contacts. In this scenario and using the example phrase above: "meet Anders B at 12:00 in downtown Malmö this Friday", the name Anders B could be evaluated against the Contacts application on the device. A photo of Anders B which is present in the Contacts application could then be embedded in the note. Also, the option to call "Anders B" could be embedded in the note. In a further example, a social networking application could be interrogated to provide information made public by "Anders B" such as a status update. Other applications and information sources are of course envisaged.

In addition to information being retrieved from a variety of sources, information may also be sent or 'pushed' to other applications on the device. In an exemplary scenario, the photos used in the notes could show up in the photo browser on the device. For example, when compiling a note as described above, once the note has been compiled and annotated using the notes compiler, the photo could be sent to the photo browser for subsequent usage. In another exemplary scenario and the example phrase above: "meet Anders B at 12:00 in downtown Malmö this Friday", the notes compiler may identify semantically that an appointment is referred to, in this case in Malmö on Friday. The notes compiler may subsequently send a request to a Calendar application to create an appointment or invitation or both. It is envisaged that a natural language processor may then identify from the note the characteristics of the appointment, which in this case may be as follows:

| | |
|---|---|
| Guests: | Anders B; |
| Time: | 12:00 Friday; |
| Location: | Malmö, Sweden. |

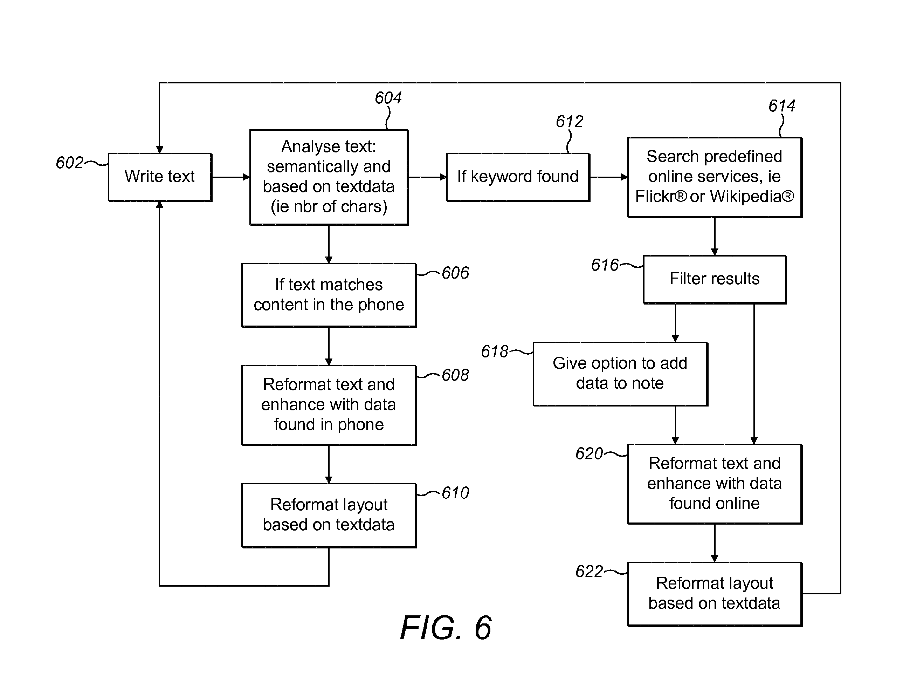

Figure 6 shows a flow chart of the example rich note compiler. First a user writes text into a newly created or previously created note (step 602). This text is then analysed, either semantically or based on the text data such as the number of characters or both (step 604). This may be done using a natural language processor or similar. The analysing may include identifying a particular grouping of characters.

If the device determines that text within the note matches content in the phone (step 606), the text is reformatted with data found in the phone (step 608). For example, the contact information in the above described example. If the text data is in a particular format, then the layout of the note may be reformatted (step 610). For example, if it is identified that two carriage returns have been placed after a phrase, it may indicate that the phrase is a title. The phrase could then be emboldened to indicate it as such in the note. Additionally, a larger font may be used for the identified phrase.

If the device determines that text in the note matches a keyword from a set of keywords (step 612), the application might initiate a search of predefined online services (step 614). These may include Wikipedia®, Flickr®, news services, blogs, search engines or social search. The results retrieved from these services may be filtered so that only pertinent results are returned (step 616). Optionally, the user may be presented with an option to supplement this note with the data retrieved (step 618). Alternatively, this may happen automatically.

Once the data or information has been retrieved, the text may be enhanced or reformatted (step 620). The layout of the text may also require or benefit from being amended. As above, if it is identified that the text data is in a particular format, then the layout of the note may be reformatted (step 622). For example, if it is identified that two carriage returns have been placed after a phrase, it may indicate that the phrase is a title. The phrase could then be emboldened to indicate it as such in the note. Additionally, a larger font may be used for the identified phrase. Similar or other reformatting may also occur if a special character is identified or the number of characters is below a minimum threshold.

Alternatively, the interface of Figure 5 could indicate that text for a note has 'pulled' an image identified as a dog from the photo album stored on the phone using known image processing techniques.

In one embodiment, the system is arranged to enable a user to record a plurality of notes or messages. The notes may take many forms and have many different contexts or meanings associated. Some examples of the type of notes recorded are listed below:
"Ask Dan about golf on Tue 20th"
"Speak to Bob about skiing trip in Banff"
"Phone florist"
"Buy Milk"
"Michelle's Wedding on 26 Nov 11 - get a gift and card"
"Book flights for OP in Munich 19-20 Jan 2012"

A combination of analysis and processing steps can be used to enhance the notes such that additional useful information or quick links and shortcuts could help the user perform desired tasks.

A text string can be interpreted as having a plurality of words and spaces. A text string may include numbers and special characters. A text string may be analysed as it is being entered or created, or may be analysed as a whole.

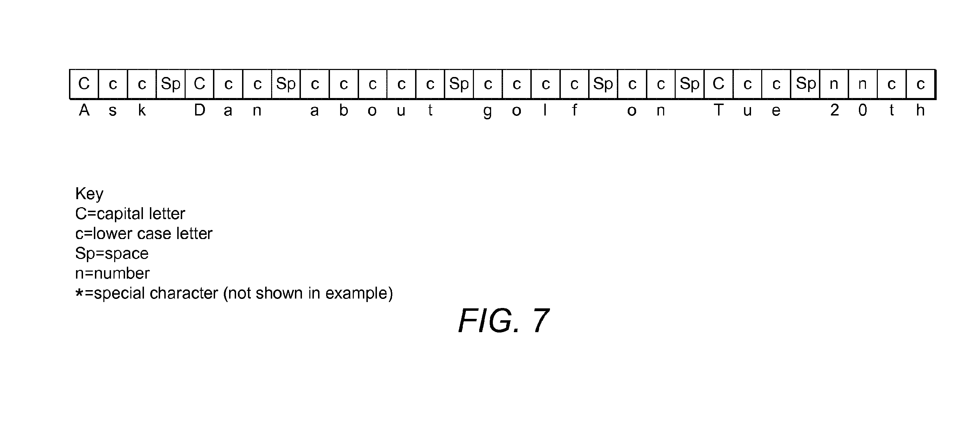

An example analysis of a text string is shown in Figure 7. the text string is analysed as comprising letters (c), spaces (sp), capital letters (C), special characters (*) and numbers (n).

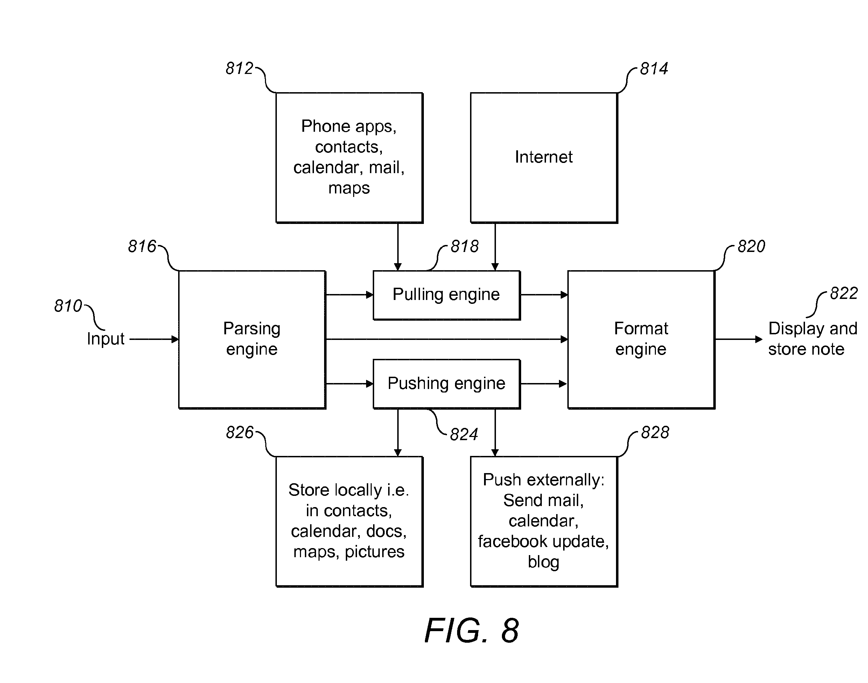

Figure 8 is a functional block diagram of a system which may be arranged to perform the analysis and processing steps described above. As shown, the system comprises: a parsing engine 816, for analysing the text string input 810; a pulling engine 818 for pulling information from local sources 812 or external sources 814; and a pushing engine 824 for pushing information to local data stores 826 or external data stores 828. Also shown is a format engine 820 which is arranged to take the text string entered 810 and any additionally provided information and format the note for display 822.

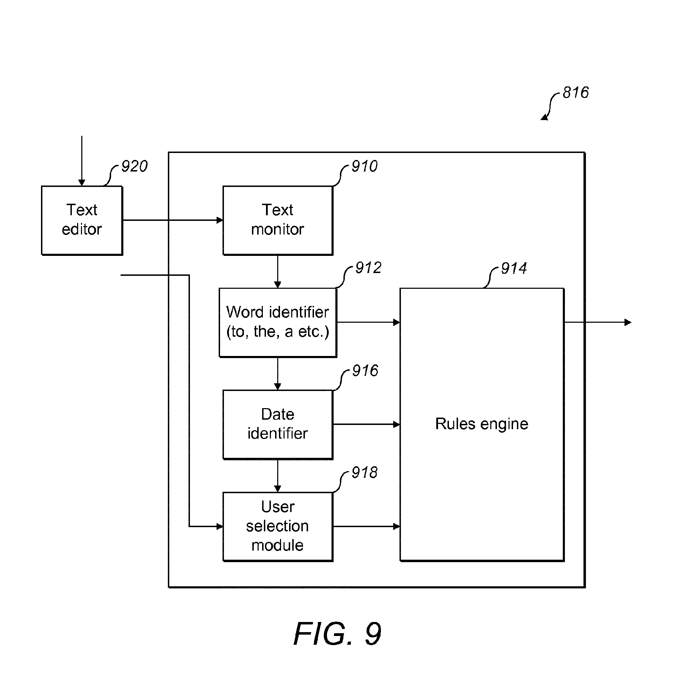

Figure 9 is a functional block diagram of the parsing engine 816 shown in Figure 8. As shown the parsing engine 816 comprises: a text monitor 910, for monitoring and analysing the characters in the text string; a word identifier 912, for detecting known words in the text string; a date identifier 916 for determining date information from within the text string; and a user selection module 918 for determining a portion of text which has been selected by the user. The parsing engine 816 also comprises a rules engine 914 which processes the results from the other modules according to the rules and communicates with the pushing 824, pulling 818 and format 820 engines of Figure 8.

A text editor 920 is provided (externally to the parsing engine 816) to take user input and translate that to a visual display of the entered text. The text editor 920 is monitored by the text monitor 910 which gathers additional information about the text as it is being entered. The text monitor 910 for example monitors when a "space" is entered and as such is able to split the entered text string into words. The text editor 920 may have auto-complete functionality which to differing degrees can predict what the user wants to type. In one example, an auto-complete program can determine if a word is a name of a place or person and if so will make the first letter of that word a capital letter. In other examples, the auto-complete program can predict what the user may wish to type and give one or more options of words for the user to select, without the user having to type the completed word.

The text monitor 910 can distinguish between letters of the alphabet, numbers, and special characters.

In the same manner as the auto-complete program can predict words or determine if words should have a capital letter, is it possible for the word identifier 912 to identify common words such as 'to', 'a', 'the', 'from', 'as', 'for'. The word identifier 912 can also identify certain adjectives which when noted can provide a possible context as to the purpose of the note. These words or keywords can be maintained in a keyword database (not shown) and have associated rules so that the created note can be appended with additional useful context.

A non-exhaustive list of words which are monitored can be found in the table below:

**Table 1**

| **Keyword** | **Summary of associated rule** |
|---|---|
| Speak | Insert contact details for identified person |
| Phone | Insert contact details for identified person |
| Ask | Insert contact details for identified person |
| e-mail or email | Generate draft e-mail |
| message | message |
| Meet | Generate meeting request |
| Book flights, train, etc | Insert link to dedicated travel application |
| Florist, garage, dentist, doctor etc | Search contact details for entries relating to types of people or establishment |
| Facebook, blog, twitter | Insert link to saved user profile - could be dedicated application or website page |
| Look up, research, investigate etc | Perform internet search on text string following keyword |

An example of how the word identifier 912 and rules engine 914 operate together is described as follows. A text string of "phone Shaun" is entered into the text editor 920. The text monitor 910 identifies separate words and identifies that one word has a capital letter. The word identifier 912 finds a match with the word 'phone' in the keyword database (not shown). The text string and the results from the text monitor 910 and word identifier 912 are passed to the rules engine 914.

When analysing the text string, the rules engine 914 operates as follows:
**IF** word = keyword (i.e. phone - ask - meet - speak to etc)
**AND IF** the next word(s) = word(s) in {name field} of {contacts}
**OR IF** word in string has capital letter **AND IF** that word = word in {name field} of {contacts}
**THEN** send contact details of contact to formatting engine to be put into note

The date identifier 916 is arranged to determine if a collection of numbers or a collection of numbers and letters represent a date and/or a time. As noted above the text monitor 910 can distinguish between letters of the alphabet, numbers, and special characters. When the text monitor 910 identifies numbers in the text string, the text string is passed to the date identifier 916 to be analysed.

The date identifier 916 is arranged to analyse the sequence of numbers and letters to ascertain if the text is in a date format. There are a great number of possible date formats e.g. dd/mm/yy or dd/mm/yyyy and all of these possible variations are provided in a date and time format database represented below:

**Table 2**

| **Date and Time Formats** | **Derived Context** |
|---|---|
| nn:nn | time |
| n followed by AM or PM | time |
| n or nn followed by jan, feb, mar etc, where nn ≤31 | date (if no year is identified - most likely in next 12 months) |
| d/m/yy or dd/mm/yy, where dd≤31, mm ≤ 12 | date |
| Mon, tue, wed, thu etc | date (if no specific date is identified -most likely in the next week) |

An example of how the text monitor 910, date identifier 916 and rules engine 914 operate together is described as follows. A text string of "night out with Taryn on 26 November 2011" is entered. The text monitor 910 notes numbers followed by text and passes string to date identifier 916. The date identifier 916 checks the text string against possible formats in the date and time database (not shown) and formats the date or time information into a preferred format. The rules engine 914 when finding a date or time passes the data in the preferred format to the pushing engine 824 together with the text string.

The Rules Engine operates as follows:
**IF** date found
**OR IF** time and date found
**THEN** format data and send to pushing engine

The pushing engine 824 is arranged to generate a calendar event for the date. Optionally, this can include copying all or part of the text string into a subject field and/or a body field of a meeting request and **SEND** meeting request to self.

In addition, other words in the text string may also provide an indication of the portion of text which may refer to a date for example "on" could indicate 'day' or 'date' data can be found in the subsequent text. Also, "at" could indicate 'time' data can be found in the subsequent text.

In addition to receiving user input of the text string, the user may additionally highlight or select portions of the text to be the subject of additional processing. For example, the user may write a note relating to a particular subject matter and wish to perform a search for additional information regarding that subject matter.

An example of how the user selection module 918 and rules engine 914 operate together is described as follows.

In an example, a text string of "decide on wedding music" is entered. The user input also includes a selection of a portion of the text string. The user selection and text string is passed to the user selection module 918. The user selection module 918 is arranged to identify from the user selection data the portion of text which has been selected. The user selection module 918 passes the identified portion of text (i.e. "wedding music") to the pulling engine 818. User selection of the portion of text may be through a gesture relating to the text or by highlighting a portion of text.

The Rules engine operates as follows:
**IF** word(s) = selected
**THEN** send selected words to pulling engine

The pulling engine 818 will then do an internet search and return top three results as hyperlinks. It is to be appreciated that the rules engine 914 may perform several operations in relation to a single note.

While the present disclosure is primarily described in terms of methods, a person of ordinary skill in the art will understand that the present disclosure is also directed to various apparatus such as a handheld electronic device including components for performing at least some of the aspects and features of the described methods, be it by way of hardware components, software or any combination of the two, or in any other manner. Moreover, an article of manufacture for use with the apparatus, such as a pre-recorded storage device or other similar computer readable medium including program instructions recorded thereon, or a computer data signal carrying computer readable program instructions may direct an apparatus to facilitate the practice of the described methods. It is understood that such apparatus, articles of manufacture, and computer data signals also come within the scope of the present disclosure.

The term "computer readable medium" as used herein means any medium which can store instructions for use by or execution by a computer or other computing device including, but not limited to, a portable computer diskette, a hard disk drive (HDD), a random access memory (RAM), a read-only memory (ROM), an erasable programmable-read-only memory (EPROM) or flash memory, an optical disc such as a Compact Disc (CD), Digital Versatile Disc (DVD) or Blu-ray™ Disc, and a solid state storage device (e.g., NAND flash or synchronous dynamic RAM (SDRAM)).

Example embodiments of the present disclosure are not limited to any particular operating system, system architecture, mobile device architecture, server architecture, or computer programming language.

The various embodiments presented above are merely examples and variations of the innovations described herein will be apparent to persons of ordinary skill in the art. As embodiments may be implemented in several forms without departing from the characteristics thereof, it should also be understood that the above-described embodiments are not limited by any of the details of the foregoing description, unless otherwise specified, but rather should be construed broadly within its scope as defined in the appended claims. Therefore, various changes and modifications that fall within the scope of the claims, or equivalents of such scope are therefore intended to be embraced by the appended claims.

## Claims

1. A computer implemented method comprising, at an electronic device adapted to receive text-based input and having a display:
receiving text-based input;
analyzing the inputted text; and,
performing, in dependence on the analyzing, at least one of:
(i) comparing at least some of the analyzed text with other text accessed by the device;
if a match is found between said at least some of the analyzed text and said accessed text, retrieving data associated with the matching accessed text; and,
associating the retrieved data with the inputted text for subsequent provision to the user;
and,
(ii) providing data associated with at least some of the analyzed text to a module of the device.

2. The method of claim 1, wherein the analyzing is based on one or more predetermined rules or sets of rules.

3. The method of claim 1 or claim 2, wherein the analyzing includes at least one of semantic analysis of the inputted text and parsing the inputted text.

4. The method of any preceding claim, wherein the analyzing comprises at least one of counting a number of characters in the text and identifying particular groupings of characters in the text.

5. The method of any preceding claim, wherein the accessed text is accessed from a data store of the device and the retrieved data is content associated with the text accessed from the data store.

6. The method of claim 5, wherein the accessed text is accessed from a data store of the device and is associated with an application module of the device, such as a contacts list of an electronic messaging module of the device.

7. The method of any of claims 1 to 4, wherein the accessed text is accessed from a predetermined resource external to the device and in communication with the device.

8. The method of any of claims 1 to 4, wherein the accessed text is accessed from a predetermined online resource.

9. The method of claim 8, wherein the accessed text is filtered.

10. The method of claim 8, wherein the retrieved data is retrieved from the online resource.

11. The method of claim 10, wherein the retrieved data includes at least one of text and image data retrieved from the online resource.

12. The method of any preceding claim, further comprising prompting the user to confirm that the retrieved data should be associated with the inputted text.

13. The method of any preceding claim, further comprising prompting the user to provide user input for association with the inputted text.

14. The method of any preceding claim, further comprising:
displaying a text window on a first display area of the display; and,
displaying the inputted text in the text window.

15. The method of any preceding claim, further comprising displaying the text in a visual item on the display augmented with the retrieved data.

16. The method of any preceding claim, further comprising displaying the text in a visual item on the display using a selected formatting.

17. The method of claim 16, wherein the formatting applied to the inputted text is selected in dependence on a characteristic of the text.

18. The method of claim 16, wherein the formatting applied to the inputted text is selected according to the analyzing of the text.

19. The method of claim 16, wherein the analyzing comprises counting a number of characters in the text and the formatting applied to the inputted text is determined by said number of characters.

20. The method of claim 19, wherein, if the number of characters in the inputted text is less than a predetermined minimum, the formatting applies emphasis to the text in the visual item, such as emboldening the text or using a larger font for the text than a default font size.

21. The method of claim 16, wherein the analyzing comprises identifying a special character in the inputted text and the formatting includes applying to at least some of the text a predetermined formatting associated with the special character.

22. The method of any preceding claim, wherein the text-based input is speech to text.

23. The method of any of claims 1 to 22, wherein the module of the device is an electronic messaging module of the device and wherein the data provided to the electronic messaging module comprises contact data, such as telephone number, email address, instant messaging address.

24. The method of any of claims 1 to 22, wherein the module of the device is a calendar module of the device and the data provided to the calendar module is appointment data.

25. The method of any preceding claim, wherein the data provided to the module is augmented with retrieved data associated with matching accessed text.

26. An electronic device comprising:
a display;
an input device for text based input;
one or more processors; and,
memory comprising instructions which when executed by one or more of the processors cause the electronic device to perform the method of any of claims 1 to 25.

27. A computer program product comprising memory comprising instructions which when executed by one or more of the processors of an electronic device adapted to receive text-based input and having a display cause the electronic device to perform the method of any of claims 1 to 25.
